# EUROPEAN PATENT SPECIFICATION

(11) **EP 0 969 990 B1**
(45) Date of publication and mention of the grant of the patent: **21.05.2003**
(21) Application number: 98912872.3
(22) Date of filing: 26.03.1998
(51) Int. Cl.: B60R 21/06, B60R 21/13

(54) **REINFORCEMENT MEANS FOR VEHICLE**
VERSTÄRKUNGSELEMENTE FÜR EIN FAHRZEUG
MOYEN DE RENFORCEMENT DESTINE A UN VEHICULE

(30) Priority: 27.03.1997 SE 9701151
(43) Date of publication of application: 12.01.2000
(73) Proprietor: AB VOLVO, 405 08 Göteborg (SE)
(72) Inventor: GYLLENSPETZ, Per, S-416 52 Göteborg (SE)
(74) Representative: Mossmark, Anders
(86) International application number: SE9800581
(87) International publication number: WO98043854

(56) References cited:
- EP-A- 0 432 824
- WO-A-97/04991
- DE-B- 2 166 310
- SE-C- 503 377
- US-A- 4 592 571

## Description

### Technical field

The invention relates to a reinforcement means in a vehicle.

### Background art

Vehicles of the estate type or MPV type (Multi Purpose Vehicle) are growing ever more popular. The popularity is largely due to the great versatility of these vehicles. The vehicles may be used for passenger transport and/or cargo transport in various combinations. The vehicles often have two or more rear seat rows. One method of varying the field of use of the vehicle is to vary the rear seat configuration, for example by folding or moving the rear seats, or even by removing one or more rear seats from the vehicle.

In order for the rear seats to be folded, moved or removed from the vehicle, the rear seats should weight as little as possible and be as easy to handle as possible, and at the same time - for safety reasons - be strong enough to absorb impacts in the direction of travel of the vehicle, said impacts being caused, for example, by cargo displacements, in turn caused by application of the brakes. In certain vehicles, the rear seats have furthermore been given such a strength and shape as to form a part of the side-impact protection of the vehicle.

Another requirement for rear seats in vehicles may be that they are to serve as mounting points for various types of safety equipment for example head-rests and safety-belts.

Of course this function requires a high structural strength in the rear seats.

To sum up, there are in other words contradictory requirements on the rear seats in vehicles of said types: Said safety requirements result in an increase of the seats' weight and volume, whereas one desires rear seats that weigh as little as possible and are easy to fold down or remove from the vehicle. The requirements on the cargo restraint and side-impact protection must of course be fulfilled regardless of which rear seat configuration the user has chosen as a given time.

GB-2 213 780 describes a cargo restraint net for use in a vehicle of the estate type. The device is movable dependent on the prevalent cargo situation, but it can only be moved parallely between two positions in the direction of the vehicle.

EP-432 824 describes a rear seat in a car comprising a frame supporting the back-cushions in order to constitute a safety-belt fixing and in order to constitute load-shifting protection against loads in the baggage space of the car which might slide.

DE-2 166 310 describes a roll-over protection for vehicles, the protection comprising means for protecting the head of the person sitting in a seat, the protecting means being arranged as an arch connected to the seat and stretching above the person sitting in the seat, thus protecting the head in case o a roll-over of the vehicle.

US-4 592 571 describes a device for use in a convertible car. The document discloses the features of the preamble portion of claim 1. The device comprises a hingedly journalled roll-over protection bar, with mounting positions for a cargo restraint net. The roll-over protection bar is, however, exclusively intended to be positioned adjacent to the front seats in a convertible car. The roll-over protection bar is hingedly journalled in order to tighten the safety belts in the event of an accident, and not to be positionable in various positions of choice. The position of the cargo restraint net provided with the device only appears to serve as a cargo restraint net in one of the possible positions of the bar, and only seems to prevent cargo displacements over a fraction of the cross-section of the vehicle.

### Summary of the invention

It is an object of the invention to provide a reinforcement means for use in a vehicle, primarily in a vehicle of the estate type or MPV type. The reinforcement function will be operable regardless of the chosen seat configuration.

Another object of the invention is to reduce the weight and volume of the rear seats in a vehicle of the estate type or mini-van, without compromising the side-impact protection and cargo restraint properties of the vehicle.

The above objects are achieved by providing a reinforcement means according to claim 1. The reinforcement means is pivotingly carried about an axis transversal to the direction of travel of the vehicle. The device may be secured in a plurality of positions, and may be used for mounting safety equipment. An example of such equipment is safety belts and head-rests. The device is provided with a cargo restraint mounted adjacent to the transverse member of the device, and may be secured in a plurality of positions. The cargo restraint may for example consist of a roll-at net, or a grate.

The device is designed in such a way as to contribute to the side-impact protection of the vehicle.

An advantage of the invention is that it, as mentioned above, is used for a number of functions where, traditionally, only the rear seats themselves have been used, meaning that the rear seats can be made lighter and easier to handle than before. Hereby, the rear seats are easier to fold down or remove from the vehicle.

Another advantage of the invention is that it can fulfil its functions regardless of the chosen rear seat configuration.

### Short description of the drawings

The invention will now be described in greater detail by way of a preferred embodiment and with reference to the accompanying drawings., in which;
Figure 1 shows a cross-section of a vehicle as seen from the side, where the device according to the invention is secured in a position behind erected rear seats.
Figure 2 shows a cross-section of a vehicle as seen from the side, where the rear seats shown in Figure 1 is removed or folded. Here, the device is secured in a position forward of the position shown in Figure 1.
Figure 3 shows a cross-section of the vehicle as seen from the side, where the rear seats shown in Figure 1 is removed or folded. Here, the device has been folded forwards and has bee secured in a position parallel to the floor of the vehicle.
Figure 4 shows how the device used as mounting for head-rests and safety-belts.

### Preferred embodiments

In a preferred embodiment of the invention, the reinforcement means 100 comprises a frame member having an arched member 110, a "roll-over protection bar", which is pivotingly carried about an axis 120. The axis 120 is transversely oriented in relation to the direction of travel of the vehicle. The figures only show an embodiment where the axis 120 is positioned adjacent to the floor of the vehicle, but other solutions are of course possible, for example that the axis 120 is positioned adjacent to the roof of the vehicle or in a position on the vehicle walls in between said positions.

The'arched member 110 may be secured in the vehicle using locking means 130. In order to be able to vary the position of the arched member 110 in a plurality of ways, there are locking means 130 for the arched member 110 in the floor, roof and walls of the vehicle. In order to enable the arched member 110 to fulfil its function, said locking means 130 are secured to the vehicle in such a way that they are able to absorb the forces that may occur in the events of an accident. Preferably they are secured in the vehicle body.

In order to protect the driver and passengers from injuries caused by cargo displacements in conjunction with collisions or heavy brakings, the reinforcement means 100 is provided with a cargo barrier 140.

One end of the cargo barrier 140 is secured in the arched member 110, and its other end may be secured in the vehicle using locking means 150. In order to be able to vary the position of the cargo barrier, the vehicle is provided with locking means 150 at a plurality of positions in the floor and roof of the vehicle. These locking means 150 should be secured in the vehicle in such a way that they are able to absorb the forces that may occur in the events of an accident. Preferably they are secured in the body of the vehicle.

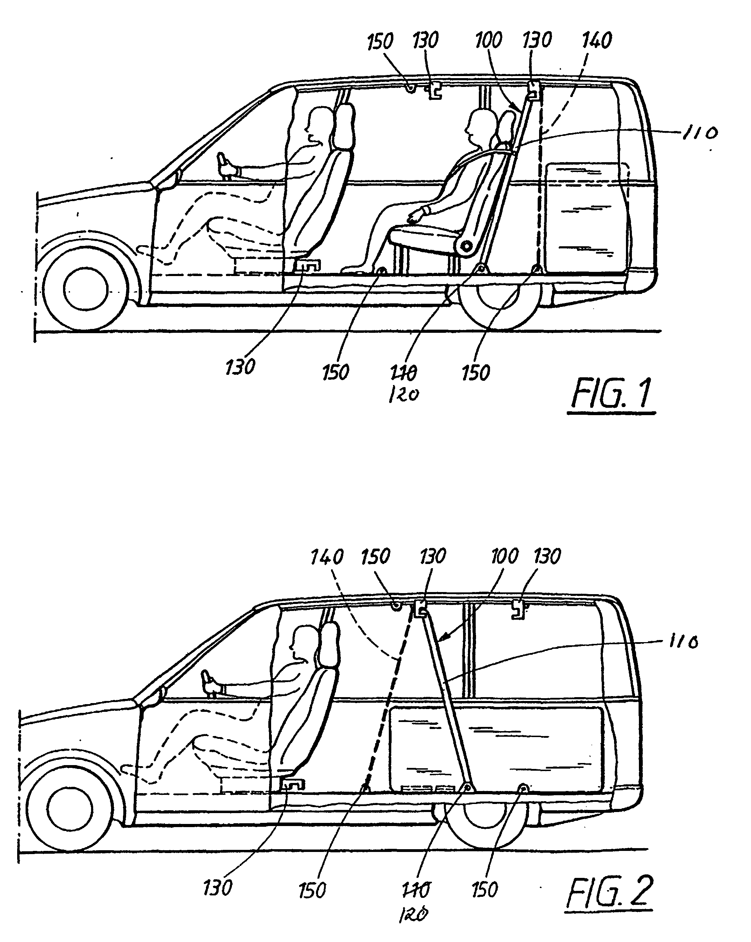

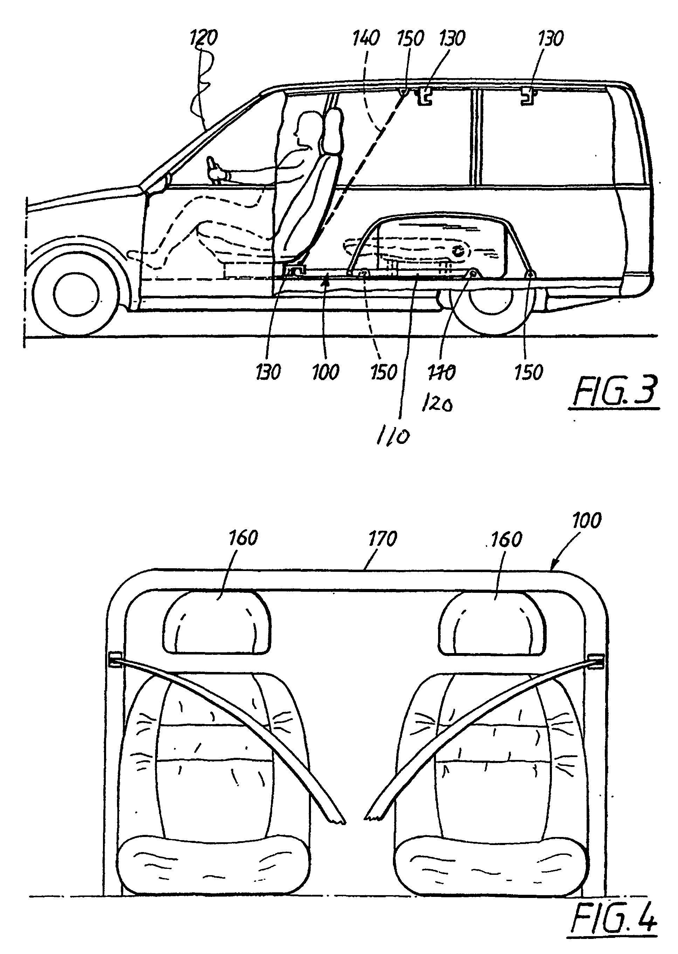

In Figure 1 and 2, the arched member 110 and the cargo member 140 may be secured in various ways, depending on, for example, the chosen seat configuration. A comparison between Figure 1 and Figure 2 it illustrates a very important feature of the invention, namely that the cargo carrier 140 may be moved, or rotated, through a hypothetical plane defined by the arched member 110. This feature, in combination with locking means 130, 150 at a large number of positions for both the arched member 110 and the cargo barrier 140, assure that the device 100 provides a cargo restraint regardless of the position of the arched member 110.

The axis about which said movements or rotation takes place, is positioned adjacent to the lower end of the cargo barrier 140 which is secured to the arched member 110.

In a preferred embodiment the cargo barrier 140 consists of an extendable net, which is secured to the arched member 110. The net material must be of such structural strength that the net is able to absorb the forces which occur upon cargo displacements. An alternative to an extendable net is to have a rigid grate as a cargo barrier. In this embodiment, the grate is rotatably secured in the arched member 110.

As is apparent from the above, it is an object of the invention to move functions, for which the rear seats are traditionally used, to the device 100 according to the invention. As shown in Figure 4 the arched member 110 may be used for securing safety equipment. In the shown example, the safety equipment consist of head-rests 160 and safety-belts 170. If this safety equipment had instead been traditionally secured in the rear seat, this would have resulted in an increased weight and size of the rear seats, since such safety equipment must be dimensioned to resist very large load forces. By instead securing the safety equipment in the arched member 110, it is possible to reduce the weight and volume of the rear seats.

The arched member also has mounting points for the rear seats, which makes the rear seats easily removable.

In Figure 4 the frame element is shown in an embodiment only consisting of an arch-shaped portion 110. An alternative embodiment is to provide the frame element with a second portion, connecting both ends of the arch-shaped portion 110 with each other. Said second portion then extends transversally across the vehicle, and is suitably, but not necessarily arranged adjacent to the axis 120.

In the Figures and above, the locking means 130, 150 for the cargo barrier 140 and for the arched member 110, are described as devices which are entirely positioned within the vehicle. An alternative solution is of course to have the locking means 130, 150 divided in two, so that a first part is mounted in the vehicle and engages a second part which is mounted in the cargo barrier 140 or on the arched member 110.

## Claims

1. Reinforcement means (100) for a vehicle, comprising a frame member having an arched member (110),
- the arched member (110) being pivotingly carried about an axis (120) which is transverse in relation to the longitudinal direction of the vehicle;
- the reinforcement means (100) comprising locking means (130) for securing the arched member (110) in a plurality of positions in load bearing sections of the vehicle's body;
- a cargo barrier (140) comprising a first end portion secured in the arched member (110) and a second end portion **characterized in that**,
the second end portion can be secured by way of locking means (150) in a plurality of positions in load bearing sections of the vehicle.

2. Reinforcement means according to claim 1, **characterized in that** the cargo barrier (140) is rotatable through a plane defined by the arched member (110).

3. Reinforcement means according to any of claims 1 or 2, **characterized in that** the cargo barrier (140) consists of an extendable net.

4. Reinforcement means according to any of claims 1 or 2, **characterized in that** the cargo barrier (140) comprises a rigid grate.

5. Reinforcement means according to claim 1, **characterized in that** said axis (120) is positioned adjacent to a floor plane of the vehicle.

6. Reinforcement means according to any of claims 1-5, **characterized in that** frame member comprises a second portion which connects the ends of the arched member (110) to each other.

7. Reinforcement means according to claim 6, **characterized in that** said second portion is arranged adjacent to the axis (120).

8. Reinforcement means according to any of claims 1-7, **characterized in that** the locking means (150) for the cargo barrier (140) are positioned in the floor of the vehicle.

9. Reinforcement means according any of claims 1-7, **characterized in that** the locking means (150) for the cargo barrier (140) are positioned in the roof of the vehicle.

10. Reinforcement means according to any of claims 1-9, **characterized in that** the locking means (130) for the arched member (110) are positioned on the walls of the vehicle.

11. Reinforcement means according to any of claims 1-9, **characterized in that** the locking means (130) for the arched member (110) are positioned in the roof of the vehicle.

12. Reinforcement means according to any of claims 1-9, **characterized in that** the locking means (130) for the arched member (110) are positioned in the floor of the vehicle.

13. Reinforcement means according to any of claims 1-12, **characterized in that** the arched member (110) form a mounting point for a head-rest (160).

14. Reinforcement means according to any of claims 1-13, **characterized in that** the arched member (110) is a mounting point for safety-belts.

15. Reinforcement means according to any of claims 1-14, **characterized in that** the arched member (110) is used for securing the rear seats.

## Patentansprüche

1. Verstärkungsmittel (100) für ein Kraftfahrzeug, welches ein Rahmenteil mit einem gekrümmten Teil (110) aufweist,
wobei das gekrümmte Teil (110) drehbar um eine Achse (120) gelagert ist, welche senkrecht bezüglich der Längsachse des Kraftfahrzeuges verläuft;
wobei das Verstärkungsmittel (100) Sperrmittel (130) zum Sichern des gekrümmten Teils (110) in mehreren Positionen in lasttragenden Abschnitten des Kraftfahrzeugkörpers aufweist; und
wobei eine Lastbarriere (140) einen ersten Endabschnitt, der in dem gekrümmten Teil (110) befestigt ist, und einen zweiten Endabschnitt aufweist,
**dadurch gekennzeichnet, dass**
der zweite Endabschnitt mittels Befestigungsmittel (150) in mehreren Positionen in lasttragenden Abschnitten des Kraftfahrzeuges befestigbar ist.

2. Verstärkungsmittel gemäß Anspruch 1, **dadurch gekennzeichnet, dass** die Lastbarriere (140) durch eine Ebene drehbar ist, welche durch das gekrümmte Teil (110) definiert ist.

3. Verstärkungsmittel gemäß einem der Ansprüche 1 oder 2, **dadurch gekennzeichnet, dass** die Lastbarriere (140) aus einem ausdehnbaren Netz besteht.

4. Verstärkungsmittel nach einem der Ansprüche 1 oder 2, **dadurch gekennzeichnet, dass** die Lastbarriere (140) ein festes Gitter aufweist.

5. Verstärkungsmittel nach Anspruch 1, **dadurch gekennzeichnet, dass** die Achse (120) nahe einer Bodenebene des Fahrzeugs angeordnet ist.

6. Verstärkungsmittel nach einem der Ansprüche 1 bis 5, **dadurch gekennzeichnet, dass** das Rahmenteil einen zweiten Abschnitt aufweist, der die Enden des gekrümmten Teils (110) miteinander verbindet.

7. Verstärkungsmittel nach Anspruch 6, **dadurch gekennzeichnet, dass** der zweite Abschnitt nahe der Achse (120) angeordnet ist.

8. Verstärkungsmittel nach einem der Ansprüche 1 bis 7, **dadurch gekennzeichnet, dass** das Sperrmittel (150) für die Lastbarriere (140) in dem Boden des Kraftfahrzeuges angeordnet ist.

9. Verstärkungsmittel nach einem der Ansprüche 1 bis 7, **dadurch gekennzeichnet, dass** das Sperrmittel (150) für die Lastbarriere (140) in der Decke des Kraftfahrzeuges angeordnet ist.

10. Verstärkungsmittel nach einem der Ansprüche 1 bis 9, **dadurch gekennzeichnet, dass** das Sperrmittel (130) für das gekrümmte Teil (110) an den Wänden des Kraftfahrzeuges angeordnet ist.

11. Verstärkungsmittel nach einem der Ansprüche 1 bis 9, **dadurch gekennzeichnet, dass** das Sperrmittel (130) für das gekrümmte Teil (110) in der Decke des Kraftfahrzeuges angeordnet ist.

12. Verstärkungsmittel nach einem der Ansprüche 1 bis 9, **dadurch gekennzeichnet, dass** das Sperrmittel (130) für das gekrümmte Teil (110) in dem Boden des Kraftfahrzeuges angeordnet ist.

13. Verstärkungsmittel nach einem der Ansprüche 1 bis 12, **dadurch gekennzeichnet, dass** das gekrümmte Teil (110) einen Befestigungspunkt für eine Kopfstütze (160) bildet.

14. Verstärkungsmittel nach einem der Ansprüche 1 bis 13, **dadurch gekennzeichnet, dass** das gekrümmte Teil (110) einen Befestigungspunkt für Sicherheitsgurte darstellt.

15. Verstärkungsmittel nach einem der Ansprüche 1 bis 14, **dadurch gekennzeichnet, dass** das gekrümmte Teil (110) zur Sicherung der Rücksitze verwendbar ist.

## Revendications

1. Moyens de renforcement (100) destinés à un véhicule, comportant un élément formant châssis ayant un élément en arc (110),
l'élément en arc (110) étant porté de manière pivotante autour d'un axe (120) qui est transversal par rapport à la direction longitudinale du véhicule,
les moyens de renforcement (100) comportant des moyens de verrouillage (130) pour fixer l'élément en arc (110) dans une pluralité de positions dans des tronçons de support de charge de la carrosserie du véhicule,
une protection de cargaison (140) comportant une première partie d'extrémité fixée dans l'élément en arc (110), et une seconde partie d'extrémité, **caractérisés en ce que**,
la seconde partie d'extrémité peut être fixée par l'intermédiaire de moyens de verrouillage (150) dans une pluralité de positions dans des tronçons de support de charge du véhicule.

2. Moyens de renforcement selon la revendication 1, **caractérisés en ce que** la protection de cargaison (140) peut tourner à travers un plan défini par l'élément en arc (110).

3. Moyens de renforcement selon la revendication 1 ou 2, **caractérisés en ce que** la protection de cargaison (140) est constituée d'un filet extensible.

4. Moyens de renforcement selon la revendication 1 ou 2, **caractérisés en ce que** la protection de cargaison (140) comporte une porte rigide.

5. Moyens de renforcement selon la revendication 1, **caractérisés en ce que** ledit axe (120) est positionné adjacent à un plan de sol du véhicule.

6. Moyens de renforcement selon l'une quelconque des revendications 1 à 5, **caractérisés en ce que** l'élément formant châssis comporte une seconde partie qui connecte les extrémités de l'élément en arc (110) l'une à l'autre.

7. Moyens de renforcement selon la revendication 6, **caractérisés en ce que** ladite seconde partie est agencée adjacente à l'axe (120).

8. Moyens de renforcement selon l'une quelconque des revendications 1 à 7, **caractérisés en ce que** les moyens de verrouillage (150) de la protection de cargaison (140) sont positionnés dans le sol du véhicule.

9. Moyens de renforcement selon l'une quelconque des revendications 1 à 7, **caractérisés en ce que** les moyens de verrouillage (150) de la protection de cargaison (140) sont positionnés dans le toit du véhicule.

10. Moyens de renforcement selon l'une quelconque des revendications 1 à 9, **caractérisés en ce que** les moyens de verrouillage (130) de l'élément en arc (110) sont positionnés sur les parois du véhicule.

11. Moyens de renforcement selon l'une quelconque des revendications 1 à 9, **caractérisés en ce que** les moyens de verrouillage (130) de l'élément en arc (110) sont positionnés dans le toit du véhicule.

12. Moyens de renforcement selon l'une quelconque des revendications 1 à 9, **caractérisés en ce que** les moyens de verrouillage (130) de l'élément en arc (110) sont positionnés dans le sol du véhicule.

13. Moyens de renforcement selon l'une quelconque des revendications 1 à 12, **caractérisés en ce que** l'élément en arc (110) forme un point de montage pour un appui-tête (160).

14. Moyens de renforcement selon l'une quelconque des revendications 1 à 13, **caractérisés en ce que** l'élément en arc (110) est un point de montage pour des ceintures de sécurité.

15. Moyens de renforcement selon l'une quelconque des revendications 1 à 14, **caractérisés en ce que** l'élément en arc (110) est utilisé pour fixer les sièges arrière.
